# FASCICULE DE BREVET EUROPEEN

(11) **EP 3 264 334 B1**
(45) Date de publication et mention de la délivrance du brevet: **11.10.2023**
(21) Numéro de dépôt: 17178863.1
(22) Date de dépôt: 29.06.2017
(51) Int. Cl.: G06V 10/22, G06V 30/142, G06V 30/40

(54) **PROCEDE D'AUTHENTIFICATION DE DOCUMENTS AU MOYEN D'UN TERMINAL MOBILE DE TELECOMMUNICATION**
AUTHENTIFIZIERUNGSVERFAHREN VON DOKUMENTEN MITHILFE EINES MOBILEN TELEKOMMUNIKATIONSENDGERÄTS
A METHOD OF AUTHENTICATING DOCUMENTS BY MEANS OF A MOBILE TELECOMMUNICATIONS TERMINAL

(30) Priorité: 29.06.2016 FR 1656123
(43) Date de publication de la demande: 03.01.2018
(73) Titulaire: Idemia Identity & Security France, 92400 Courbevoie (FR)
(72) Inventeur: TOURET, Olivier, 92130 ISSY-LES-MOULINEAUX (FR); CHASTEL, Pierre, 92130 ISSY-LES-MOULINEAUX (FR)
(74) Mandataire: Idemia

(56) Documents cités:
- WO-A1-2014/059439
- WO-A1-2015/052318
- DE-A1-102013 101 587
- KR-A- 20150 071 063
- US-A1- 2011 211 760
- US-A1- 2013 287 265
- US-A1- 2014 044 337
- US-A1- 2015 078 671

## Description

La présente invention concerne l'authentification de documents de type papier, tels que les passeports et les cartes d'identité.

### ETAT DE LA TECHNIQUE

Pour tenter de rendre infalsifiables des documents, il est connu d'agencer sur ceux-ci des motifs sécuritaires comprenant notamment :
- des motifs d'un premier type, dont la finesse et/ou la complexité graphique rendent la reproduction difficile ;
- des motifs d'un deuxième type, dont l'aspect (forme, intensité, couleur...) varie en fonction des conditions d'observation, à savoir l'inclinaison avec laquelle la lumière arrive dessus (paramètres angulaires d'illumination) et de la position de l'observateur par rapport au motif (paramètres angulaires de visualisation).

L'authentification du document repose sur la perception visuelle correcte des motifs du premier type et sur la perception visuelle correcte de l'aspect des motifs du deuxième type compte tenu des conditions d'observation réelles.

Il est connu des systèmes automatiques qui comprennent un bâti qui porte une unité de traitement reliée à au moins un capteur d'image et un dispositif d'éclairage. Le bâti définit un logement pour recevoir le document en regard du capteur d'image et de l'organe d'éclairage de manière à assurer un positionnement identique et prédéterminé des documents par rapport au capteur et à l'organe d'éclairage. On connaît alors l'aspect attendu des motifs sécuritaires du deuxième type, ce qui autorise une authentification automatisée.

WO 2015/052318 A1 décrit un dispositif portatif destiné à authentifier un marquage sur un objet, le marquage présentant un spectre de réflexion de la lumière subordonné à l'angle de vision. Ce dispositif comprend : - un imageur destiné à générer des données d'image qui comprennent des informations de spectre, - un détecteur de données d'image de marquage associées au marquage dans les données d'image, - un évaluateur d'une valeur d'un paramètre de spectre prédéfini en fonction d'informations de spectre d'au moins une partie desdites données d'image de marquage, - un estimateur d'une valeur d'un angle de vision entre l'imageur et le marquage associé à une valeur déterminée du paramètre de spectre et - un dispositif pour prendre une décision d'authentification en fonction d'au moins deux valeurs de paramètres de spectre et leurs valeurs associées d'angle de vision.

DE 10 2013 101587 A1 décrit un procédé de contrôle de l'authenticité d'un document d'identification comportant un signe de sécurité avec des représentations dépendant de l'angle de vue. Ce procédé comprend la capture d'une première image du document d'identification avec le signe de sécurité dans une première position spatiale du document d'identification, la capture d'une deuxième image du document d'identification avec la caractéristique de sécurité dans une deuxième position spatiale du document d'identification afin d'obtenir une séquence d'images dans différentes positions spatiales du document d'identification, et la comparaison de caractéristiques d'image de la séquence d'images avec des caractéristiques de référence afin de vérifier l'authenticité du document d'identification.

US 2014/044337 A1 décrit un procédé d'authentification d'un document de sécurité comportant un motif sécuritaire dont l'aspect varie selon les conditions d'éclairage. Ce procédé comprend deux étapes de capture d'une image, l'une sans flash et l'autre avec. Il ne comprend pas la détermination de paramètres angulaires de prise de vue.

KR 2015 0071063 A décrit un procédé d'authentification d'un document pourvu d'un hologramme. Ce procédé comprend une étape de capture d'image à l'aide d'un téléphone mobile équipé d'un gyroscope permettant de déterminer l'angle de prise de vue. Ce procédé ne comprend pas la détermination de paramètres angulaires de prise de vue par comparaison de caractéristiques géométriques détectées dans l'image et de caractéristiques prédéterminées mémorisées.

### OBJET DE L'INVENTION

Un but de l'invention est de fournir un moyen permettant d'authentifier automatiquement un document lorsque la position du document n'est pas précisément imposée par rapport au capteur d'image et éventuellement lorsque l'angle d'illumination du document n'est pas non plus connu.

### BREF EXPOSE DE L'INVENTION

A cet effet, on prévoit, selon l'invention, un procédé d'authentification selon la revendication 1.

Ainsi, la position du capteur d'image par rapport au document est calculée et au moins un aspect attendu du motif peut être déduit des paramètres angulaires d'observation résultant de cette position. Il n'est dès lors pas nécessaire d'imposer un positionnement précis du terminal mobile de télécommunication par rapport au document lors de la capture d'image.

L'invention a également comme objet un terminal mobile de télécommunication agencé pour la mise en oeuvre de ce procédé.

D'autres caractéristiques et avantages de l'invention ressortiront à la lecture de la description qui suit d'un mode de mise en oeuvre particulier non limitatif de l'invention.

### BREVE DESCRIPTION DES FIGURES

Il sera fait référence aux dessins annexés, parmi lesquels :
- la figure 1 est une vue schématique illustrant une capture de l'image d'un document au moyen de ce terminal,
- la figure 2 est une vue schématique d'un terminal mobile utilisable pour la mise en oeuvre du procédé selon l'invention.

### DESCRIPTION DETAILLEE DE L'INVENTION

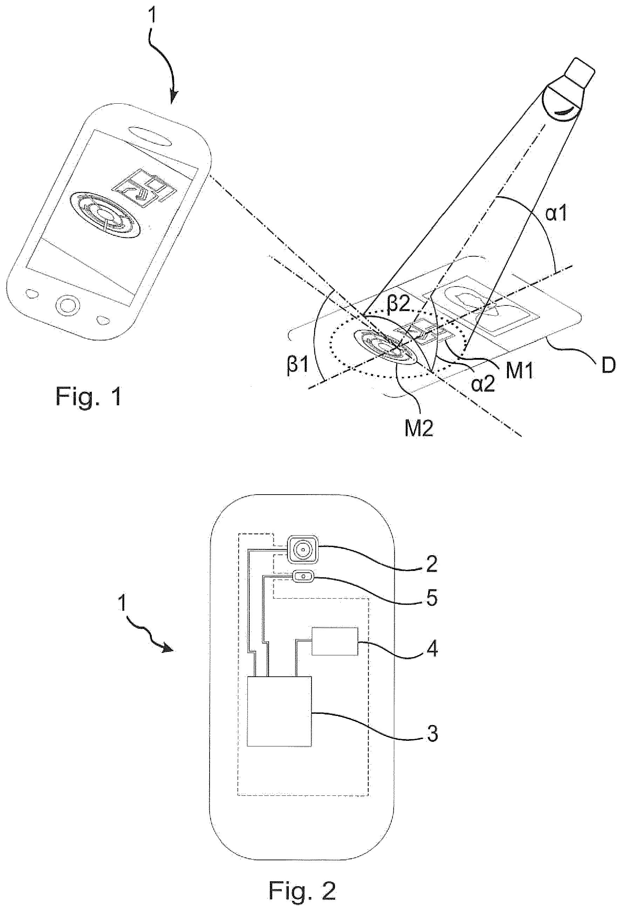

En référence à la figure 1, l'invention est ci-après décrite en application à l'authentification de documents D de type passeport, de forme rectangulaire. Au moins une partie de ce document comporte des motifs sécuritaires comprenant ici :
- un motif M1 d'un premier type, dont la finesse et/ou la complexité graphique rendent la reproduction difficile, le motif M1 étant ici constitué d'un assemblage de lignes très fines ;
- un motif M2 d'un deuxième type, dont l'aspect (forme, intensité, couleur...) varie en fonction des conditions d'observation, à savoir des paramètres angulaires représentatifs de l'inclinaison des rayons lumineux arrivant sur le motif M2 (représentée au moyen des angles d'illumination α1, α2 sur la figure 1) et de la position de l'observateur par rapport au motif M2 (représentée au moyen des angles de visualisation β1, β2).

Les motifs M1 et M2 sont réalisés d'une manière connue en soi.

En référence également à la figure 2, l'invention est mise en oeuvre au moyen d'un terminal mobile de télécommunication, généralement désigné en 1, ici un téléphone mobile de type « smartphone », ayant un capteur d'image 2 sensible aux rayonnements du domaine visible, un organe d'illumination 5, ici une diode électroluminescente, et une unité de traitement 3 reliée au capteur d'image 2, à l'organe d'illumination 5 et à une mémoire 4 contenant des caractéristiques géométriques prédéterminées du document D. L'unité de traitement 3 est un circuit électronique comprenant un processeur capable d'exécuter des programmes informatiques stockés dans la mémoire 4.

L'un de ces programmes informatiques est un programme d'authentification de document D mettant en oeuvre le procédé d'authentification de l'invention.

Ce procédé d'authentification comprend les étapes de :
- capturer au moyen du capteur d'image 2 au moins une image de la partie du document D portant les motifs M1, M2,
- transmettre l'image à l'unité de traitement 3.

L'unité de traitement 3 compare le motif M1 détecté sur l'image à une représentation du motif M1 enregistrée en mémoire 4. Si le motif M1 détectée et sa représentation modifiée correspondent, le programme se poursuit.

L'unité de traitement 3 est programmée pour déterminer l'angle de prise de vue β par comparaison de caractéristiques géométriques détectées dans l'image du document D et des caractéristiques géométriques prédéterminées mémorisées dans la mémoire 4. Plus précisément, l'unité de traitement 3 met en oeuvre un programme de traitement d'image pour détecter dans l'image les contours du document et différents éléments comme les motifs M1, M2, une photographie, la bande MRZ... A partir de la déformation du contour (qui est d'autant plus trapézoïdal que l'angle de prise de vue est faible), l'unité de traitement 3 calcule les paramètres angulaires de prise de vue correspondant à la position angulaire de visualisation (définie les paramètres angulaires de visualisation β1, β2).

L'unité de traitement 3 interroge une base de données qui est hébergée dans la mémoire 4 et qui met en relation des angles de prise de vue et des aspects attendus et, pour chaque un angle de prise de vue, des aspects attendus et des angles d'illumination. L'unité de traitement 3 recherche dans la base de données un aspect attendu du motif sécuritaire M2 en fonction de l'angle de visualisation β. Comme le motif M2 a un aspect qui varie en fonction de l'angle d'illumination α et de l'angle de visualisation β, et que seul ce dernier est connu, l'unité de traitement 3 identifie plusieurs aspects attendus.

L'unité de traitement 3 compare alors les aspects attendus avec l'aspect du motif sécuritaire M2 tel qu'il est détecté sur l'image du document D et déclare le document D authentique lorsque l'un des aspects attendus correspond à l'aspect détecté.

Les aspects attendus enregistrés dans la base de données sont mémorisées pour des combinaisons discrètes de paramètres angulaires de visualisation et d'illumination : l'aspect détecté avec les paramètres angulaires de visualisation déterminés est comparée avec les aspects attendus correspondant aux paramètres angulaires les plus proches dans la base de données (pour les paramètres angulaires correspondant à une inclinaison de visualisation, il y a plusieurs aspects attendus pour les différents paramètres angulaires d'illumination). Chaque comparaison donne un score qui est comparé avec des seuils. D'autres manières de procéder sont bien entendu envisageables.

En variante, il est possible de capturer plusieurs images avec des angles de prise de vue différents. Ceci permet de disposer de plusieurs aspects dépendant chacun d'un angle de visualisation et d'un angle d'illumination. Ceci renforce l'authentification.

Bien entendu, l'invention n'est pas limitée aux modes de réalisation décrits mais englobe toute variante entrant dans le champ de l'invention telle que définie par les revendications.

En particulier, le document peut ne comprendre qu'un ou plusieurs motifs M2.

L'aspect du motif sécuritaire peut ne varier qu'en fonction de l'angle de visualisation.

L'image peut être capturée alors que l'organe d'illumination est activé permettant ainsi d'imposer des paramètres angulaires d'illumination très proches des paramètres angulaires de prise de vue.

En variante, le procédé peut comprendre l'étape de capturer une image avec l'organe d'illumination activé et une image avec l'organe d'illumination désactivé. On dispose alors de deux aspects du motif M2.

Le terminal de télécommunication peut avoir une structure différente de celle décrite. Le terminal peut être un téléphone mobile, une tablette multimédia, un ordinateur portable...

L'unité de traitement et la mémoire peuvent ne pas être embarquées dans le terminal mobile de télécommunication mais accessibles par un réseau tel qu'Internet.

La comparaison peut être effectuée dans un serveur distinct, hors du terminal.

## Revendications

1. Procédé d'authentification d'au moins un document ayant un format prédéterminé et portant au moins un motif sécuritaire dont l'aspect varie en fonction des paramètres angulaires d'observation, le procédé étant mis en oeuvre au moyen d'un terminal mobile de télécommunication ayant un capteur d'image, et d'une unité de traitement reliée à une mémoire contenant des caractéristiques géométriques prédéterminées du document, le procédé comprenant les étapes de capturer au moins une image du document au moyen du capteur d'image et de la transmettre à l'unité de traitement, et de déterminer, par l'unité de traitement, des paramètres angulaires de prise de vue par comparaison de caractéristiques géométriques détectées dans l'image du document et des caractéristiques géométriques prédéterminées mémorisées,
le procédé étant **caractérisé en ce qu'**il comprend les étapes ultérieures, réalisées par l'unité de traitement, de
- déduire un aspect attendu du motif sécuritaire à partir d'une base de données mettant en relation des paramètres angulaires de prise de vue et des aspects attendus et, pour des paramètres angulaires prédéterminés de prise de vue, des aspects attendus et des paramètres angulaires d'illumination, l'unité de traitement recherche dans la base de données un aspect attendu du motif sécuritaire en fonction de l'angle de visualisation et identifie plusieurs aspects attendus selon l'angle d'illumination,
- comparer l'aspect attendu avec un aspect détecté du motif sécuritaire sur l'image du document, les aspects attendus enregistrés dans la base de données sont mémorisés pour des combinaisons discrètes de paramètres angulaires de visualisation et d'illumination, l'aspect détecté avec les paramètres angulaires de visualisation déterminés est comparé avec les aspects attendus correspondant aux paramètres angulaires les plus proches dans la base de données et chaque comparaison donne un score qui est comparé avec des seuils,
- déclarer le document authentique lorsque l'aspect attendu correspond à l'aspect détecté.

2. Procédé selon la revendication 1, le terminal de télécommunication comprenant un organe d'illumination, dans lequel l'image est capturée alors que l'organe d'illumination est activé.

3. Procédé selon la revendication 2, comprenant l'étape de capturer une image avec l'organe d'illumination activé et une image avec l'organe d'illumination désactivé.

4. Procédé selon l'une quelconque des revendications précédentes, comprenant l'étape de capturer plusieurs images avec des paramètres angulaires de prise de vue différents.

5. Procédé selon l'une quelconque des revendications précédentes, dans lequel l'unité de traitement et la mémoire sont embarquées dans le terminal mobile de télécommunication.

6. Procédé selon l'une quelconque des revendications 1 à 4, dans lequel la comparaison est effectuée hors du terminal.

7. Terminal mobile de télécommunication ayant un capteur d'image et une unité de traitement reliée à une mémoire contenant des caractéristiques géométriques prédéterminées du document, l'unité de traitement étant programmée pour la mise en oeuvre du procédé selon l'une quelconque des revendications précédentes.

## Patentansprüche

1. Verfahren zur Authentifizierung mindestens eines Dokuments, das ein vorbestimmtes Format besitzt und mindestens ein Sicherheitsmuster trägt, dessen Erscheinungsbild in Abhängigkeit von den Betrachtungswinkelparametern variiert, wobei das Verfahren mittels eines mobilen Telekommunikationsendgeräts umgesetzt wird, das einen Bildsensor besitzt, und einer Verarbeitungseinheit, die mit einem Speicher verbunden ist, der vorbestimmte geometrische Merkmale des Dokuments enthält, wobei das Verfahren die Schritte umfasst, mindestens ein Bild des Dokuments mittels des Bildsensors aufzunehmen und es an die Verarbeitungseinheit zu übertragen und, durch die Verarbeitungseinheit, Aufnahmewinkelparameter durch Vergleichen von in dem Bild des Dokuments erkannten geometrischen Merkmalen und gespeicherten vorbestimmten geometrischen Merkmale zu bestimmen,
wobei das Verfahren **dadurch gekennzeichnet ist, dass** es die weiteren, von der Verarbeitungseinheit ausgeführten Schritte umfasst,
- ein erwartetes Erscheinungsbild des Sicherheitsmusters anhand einer Datenbank abzuleiten, die Aufnahmewinkelparameter und erwartete Erscheinungsbilder, und, für vorbestimmte Aufnahmewinkelparameter, erwartete Erscheinungsbilder und Beleuchtungswinkelparameter in Beziehung setzt; die Verarbeitungseinheit sucht in der Datenbank ein erwartetes Erscheinungsbild des Sicherheitsmusters in Abhängigkeit von dem Visualisierungswinkel und identifiziert mehrere erwartete Erscheinungsbilder gemäß dem Beleuchtungswinkel,
- das erwartete Erscheinungsbild mit einem auf dem Bild des Dokuments erkannten Erscheinungsbild des Sicherheitsmusters zu vergleichen; die in der Datenbank registrierten erwarteten Erscheinungsbilder sind für diskrete Kombinationen von Visualisierungs- und Beleuchtungswinkelparametern gespeichert, das erkannte Erscheinungsbild mit den bestimmten Visualisierungswinkelparametern wird mit den erwarteten Erscheinungsbildern verglichen, die den in der Datenbank am nächsten kommenden Winkelparametern entsprechen, und jeder Vergleich ergibt ein Ergebnis, das mit Schwellenwerten verglichen wird,
- das Dokument für echt zu erklären, wenn das erwartete Erscheinungsbild dem erkannten Erscheinungsbild entspricht.

2. Verfahren nach Anspruch 1, wobei das Telekommunikationsendgerät eine Beleuchtungseinrichtung umfasst, bei dem das Bild aufgenommen wird, während die Beleuchtungseinrichtung aktiviert ist.

3. Verfahren nach Anspruch 2, umfassend den Schritt, ein Bild mit der aktivierten Beleuchtungseinrichtung und ein Bild mit der deaktivierten Beleuchtungseinrichtung aufzunehmen.

4. Verfahren nach einem der vorhergehenden Ansprüche, umfassend den Schritt, mehrere Bilder mit unterschiedlichen Aufnahmewinkelparametern aufzunehmen.

5. Verfahren nach einem der vorhergehenden Ansprüche, bei dem die Verarbeitungseinheit und der Speicher in das mobile Telekommunikationsendgerät integriert sind.

6. Verfahren nach einem der Ansprüche 1 bis 4, bei dem der Vergleich außerhalb des Endgeräts durchgeführt wird.

7. Mobiles Telekommunikationsendgerät, das einen Bildsensor besitzt und eine Verarbeitungseinheit, die mit einem Speicher verbunden ist, der vorbestimmte geometrische Merkmale des Dokuments enthält, wobei die Verarbeitungseinheit zur Umsetzung des Verfahrens nach einem der vorhergehenden Ansprüche programmiert ist.

## Claims

1. Method for authenticating at least one document having a predetermined format and bearing at least one security pattern whose appearance varies as a function of the angular observation parameters, the method being implemented by means of a mobile telecommunications terminal having an image sensor, and a processing unit linked to a memory containing predetermined geometrical characteristics of the document, the method comprising the steps of capturing at least one image of the document by means of the image sensor and transmitting it to the processing unit, and of determining, by the processing unit, angular exposure parameters by comparison of geometrical characteristics detected in the image of the document and stored predetermined geometrical characteristics,
the method being **characterized in that** it comprises the subsequent steps, performed by the processing unit, of
- deducing an expected appearance of the security pattern on the basis of a database relating angular exposure parameters and expected appearances and, for predetermined angular exposure parameters, expected appearances and angular illumination parameters, the processing unit searches in the database for an expected appearance of the security pattern as a function of the viewing angle and identifies several expected appearances according to the angle of illumination,
- comparing the expected appearance with a detected appearance of the security pattern on the image of the document, the expected appearances stored in the database are stored for discrete combinations of angular viewing and illumination parameters, the detected appearance with the determined angular viewing parameters is compared with the expected appearances corresponding to the angular parameters closest in the database and each comparison gives a score which is compared with thresholds,
- declaring the document authentic when the expected appearance corresponds to the detected appearance.

2. Method according to Claim 1, the telecommunications terminal comprising an illumination member, wherein the image is captured while the illumination member is activated.

3. Method according to Claim 2, comprising the step of capturing an image with the illumination member activated and an image with the illumination member deactivated.

4. Method according to any one of the preceding claims, comprising the step of capturing several images with different angular exposure parameters.

5. Method according to any one of the preceding claims, wherein the processing unit and the memory are embedded in the mobile telecommunications terminal.

6. Method according to any one of Claims 1 to 4, wherein the comparison is performed external to the terminal.

7. Mobile telecommunications terminal having an image sensor and a processing unit linked to a memory containing predetermined geometrical characteristics of the document, the processing unit being programmed to implement the method according to any one of the preceding claims
